# EUROPEAN PATENT SPECIFICATION

(11) **EP 2 615 734 B1**
(45) Date of publication and mention of the grant of the patent: **25.12.2019**
(21) Application number: 10856924.5
(22) Date of filing: 07.09.2010
(51) Int. Cl.: H02P 27/06, H02P 6/18, H02P 29/024, H02P 23/14

(54) **AC MOTOR ROTATION DIRECTION DETECTING METHOD AND ELECTRIC POWER CONVERSION DEVICE FOR AC MOTOR USING SAME**
VERFAHREN ZUR ERKENNUNG DER DREHRICHTUNG EINES WECHSELSTROMMOTORS UND ELEKTRISCHE LEISTUNGSUMWANDLUNGSVORRICHTUNG FÜR EINEN AC-MOTOR DAMIT
PROCÉDÉ DE DÉTECTION DU SENS DE ROTATION D'UN MOTEUR À COURANT ALTERNATIF ET DISPOSITIF DE CONVERSION D'ÉNERGIE ÉLECTRIQUE POUR UN MOTEUR À COURANT ALTERNATIF UTILISANT CE PROCÉDÉ

(43) Date of publication of application: 17.07.2013
(73) Proprietor: Hitachi Industrial Equipment Systems Co., Ltd., Tokyo 101-0022 (JP)
(72) Inventor: ARAO, Yusuke, Narashino-shi Chiba 275-8611 (JP); IBORI, Satoshi, Tokyo 101-0022 (JP)
(74) Representative: Mewburn Ellis LLP
(86) International application number: PCT/JP2010/005486
(87) International publication number: WO 2012/032571

(56) References cited:
- ES-A1- 2 333 501
- JP-A- 11 235 089
- JP-A- 2006 320 045
- JP-A- 2009 077 539
- US-A- 5 347 443
- US-A- 6 018 225

## Description

### TECHNICAL FIELD

This application relates to an electric power conversion device for converting an AC electric power from a commercial power source into a desired AC electric power, thereby for supplying that to an AC motor, and in particular, it relates to a rotation direction detecting method of the AC motor for enabling to detect the rotation direction of the AC motor during the time when it re-starts, correctly, and an electric power conversion device for the AC motor using the same therein.

### BACKGROUND OF THE INVENTION

Conventionally, under the situation of supplying an AC electric power from a commercial power source, as an input power source, through converting it into a desired AC electric power **by means** of an electric power conversion device, thereby driving an AC motor, when an abnormality generates, such as, a momentary or instantaneous electric power interruption, etc., for example, and as a result thereof, if an output of the AC power from that electric power conversion device to the AC motor is stopped (or cut off), there is a necessity of re-starting that AC motor by means of the electric power conversion device mentioned above. And, when re-starting the AC motor under such situation by the electric power conversion device mentioned above, for the electric power conversion device mentioned above, it is necessary to detect the conditions of the motor under the condition of being within an inertial rotating condition, for example, information, such as, a rotation speed of the motor, a phase of voltage induced, a rotating direction, etc.

Thus, this means is because of cause of the reasons, i.e., if the electric power conversion device is re-started under the condition of not knowing the information including the rotation speed of the AC motor, etc., i.e., supplying an output thereof to the AC motor, then that AC motor changes the rotation speed thereof, abruptly, or the control of that AC motor comes to be unstable, and as a result thereof, excessive current flow runs into the AC motor and/or the electric power conversion device, and with this, the electric power conversion device mentioned above generates an excess current trip, e.g., falling into an uncontrollable condition, etc.

For such reasons, conventionally, an abnormality of power source, such as, the instantaneous electric power interruption, etc., is generated in an input power source to the electric power conversion device, in general, and for that reason, it is necessary for the electric power conversion device, to obtain such information as mentioned above of that AC motor, such as, the rotation speed thereof, etc., correctly, thereby to bring the electric power conversion device to be in synchronism with the condition of that AC motor, and to provide an output thereof, in particular, when re-starting the AC motor under the inertial rotating condition by the electric power conversion device mentioned above, after the electric power conversion device cuts off the output to the AC motor, once.

However, in the following Patent Document 1 is described a method relating to re-starting of an induction motor. Also, in the following Patent Document 2 is described a method, wherein the inductive voltage from a motor is converted into a pulse through a converter circuit, to obtain a rotation frequency of the motor from a frequency of that pulse converted, and thereby re-starting the motor depending on that rotation frequency.

Also, in the following Patent Document 3 is described a method, detecting a rotation speed of a motor, a phase of the inductive voltage, and a rotating direction of the motor, without using a speed detector and/or a voltage detector, and thereby re-starting an induction motor by using the electric power conversion device. Further, in the following Patent Document 4 is described that, under the situation where it is difficult to re-start with the method described in the Patent Document 3 mentioned above, a waiting is made until the time when the electric power conversion device can be re-started, and thereafter that re-starting is conducted (i.e., there is a necessity of the waiting time).

### Prior Art Documents

### Patent Documents

[Patent Document 1] Japanese Patent Laying-Open No. Sho 58-99286 (1983);
[Patent Document 2] Japanese Utility-Model Laying-Open No. Sho 60-038089 (1985);
[Patent Document 3] Japanese Patent Laying-Open No. 2001-161094 (2001); and
[Patent Document 4] Japanese Patent Laying-Open No. 2004-153911 (2004).

US6018225 discloses an arrangement in which a motor is reconnected to a motor drive by exciting the motor to induce a back EMF, determining a speed of rotation of the motor based on the induced back EMF induced, and reconnecting the motor drive to the motor based on the speed determined. In order to induce the back EMF, current which flows through the motor is controlled using first and second regulators. The outputs of the first and second current regulators are separated from each other in phase by approximately 90 DEG . A positive feedback loop is established by using the output of one of the first and second regulators to generate an input for the other one of the first and second regulators. The positive feedback loop advantageously causes the back EMF to continually increase as the motor continues to be excited, or at least not decay so rapidly that the speed of the motor cannot be accurately determined. Additionally, to determine the speed of the motor, the back EMF may be measured by commanding a current at a current command input of a current regulator, and then examining the voltage command output of the current regulator.

### BRIEF SUMMARY OF THE INVENTION

### PROBLEM(S) TO BE DISSOLVED BY THE INVENTION

However, with such conventional technologies as mentioned above, there are still pointed out the problems, which will be mentioned below.

First of all, in case where the time-period of the instantaneous electric power interruption mentioned above is relatively short, it is possible to distinguish the rotation direction of that AC motor, when the electric power is reinstated, if memorizing the rotation direction, which is outputted from the electric power conversion device to the AC motor when that instantaneous electric power interruption occurs, for example, in a non-volatile memory or the like, which is provided within an inside of the electric power conversion device mentioned above. With such method, since there is no such a necessity of applying plural numbers of pulse converters as was mentioned above, and the rotation speed of the AC motor can be obtained, easily, it is possible to achieve the re-starting of the AC motor, with cheap circuitry.

However, in case where the time-period of the instantaneous electric power interruption is long, the inductive voltage of the AC motor distinguishes, and under the situation where the rotation speed of the AC motor cannot be detected by the pulse converters mentioned above, there is a problem that the AC motor cannot be re-started with high accuracy.

Also, in particular, when trying to apply the method, which is described in the Patent Document 3 mentioned above, into a synchronous motor, generating the inductive voltage (i.e., speed inductive voltage) proportional to the rotation speed, always, even during the time of the inertial rotation thereof, and further increasing the inductive voltage mentioned above together with an increase of that rotation speed, as was described in the Patent Document 4 mentioned above, it is difficult to control the actual current down to 0 (zero) in case where a response of a current control system for controlling a current instruction down to 0 (zero) is slow, and for that reason, it is difficult to make the re-starting. However, in equipment, such as, an air conditioning or a water supply, etc., in more details, a motor for driving a fan or a pump, which is installed within such equipment, it is required, for that motor, to return to a normal operation, as soon as possible, when the electric power comes back from the abnormality of power source, such as, the instantaneous electric power interruption, etc.; this sometimes brings up a problem of the waiting time.

Also, even if applying the method described in the Patent Document 4 mentioned above, there is still a possibility that the re-starting comes to be difficult, in case where the synchronous motor drives a load having large inertia, such as, a fan, etc. In more details, when such abnormality of power source, the instantaneous electric power interruption, etc., as was mentioned, generates within an input power source to the electric power conversion device, and as a result the electric power conversion device stops the output to the synchronous motor, thereafter, for example, the synchronous motor rotated by a fan connected with, i.e., in the inertial rotating condition, is in such a condition that the rotation speed thereof can be lowered hardly, due to an effect of so-called the inertial load, in particular, when the rotation speed thereof is large, and therefore, in such a way of use, it is difficult to be re-started. Such condition is a case where a large inertial load is attached onto the motor, i.e., a case where the AC motor is always driven to rotate, in the way of use of the fan or the pump, etc., for example. Also, in case where the response or the like is slow, of the current control system within an inside of the electric power conversation device, there is a possibility that an error comes to be large.

Also, with conversion of the inductive voltages generating between the respective phases of the motor into pulses by means of a pulse converter (s) provided within the electric power conversion device, there can be obtained plural number of pulse information. For example, it is possible to determine a rotation frequency of the motor, from a cycle of pulse of each phase, phases of voltages, from timings of exchanging each pulse, and a rotation direction of the motor, from a sequence of exchange of each pulse, respectively. However, with such method, because of necessity of plural numbers of pulse converters and so on, there is a problem that the circuitry comes to be complex.

Namely, in the conventional technologies mentioned above, as the situations where the electric power conversion device cannot obtain the rotation direction of the AC motor can be listed up the following cases, for example. Thus, (1) it is the case where the AC motor rotates due to the inertia, and in this case, the electric power conversion device cannot determine the rotation direction of the AC motor. (2) It is also other case where the abnormality, such as, the instantaneous electric power interruption, etc., occurs under the condition where the AC motor is driving the load, the fan/pump, and in this case, there may be generated a condition where the AC motor is driven into the rotation direction opposite to that before the instantaneous electric power interruption occurs. However, in this case, even if the electric power conversion device memorizes an instruction of rotation direction before the instantaneous electric power interruption occurs therein, the rotation direction of the AC motor comes to be opposite to the instruction of rotation direction of the electric power conversion device.

Then, according to the present invention, being accomplished by the problems of the conventional technologies mentioned above into the consideration thereof, an object thereof is to provide a rotation direction detecting method of the AC motor, for enabling to detect the rotation direction of that AC motor, quickly and correctly, in particular, during the re-starting of the AC motor after generation of the abnormality mentioned above, such as, the instantaneous electric power interruption, etc., and further to provide an electric power conversion device for the AC motor with applying the method therein.

### MEANS FOR DISSOLVING THE PROBLEM(S)

For accomplishing the object mentioned above, according to the present invention there is provided a method for detecting rotation direction of an AC motor according to claim 1.

The method of the first aspect of the present invention may optionally be as specified in any one of claims 2 to 7.

According to a second aspect of the present invention there is provided an electric power conversion device for an AC motor according to claim 8.

The electric power conversion device according to claim 8 may optionally be as specified in any one of claims 9 to 14.

### EFFECT(S) OF THE INVENTION

According to such present invention, as was mentioned above, it is possible to achieve an effect being extremely superior in usability thereof, i.e., to provide the rotation direction detecting method of the AC motor, for enabling to detect the rotation direction of that AC motor, quickly and correctly, in particular, during the re-starting of the AC motor after generation of the abnormality mentioned above, such as, the instantaneous electric power interruption, etc., and further to provide the electric power conversion device for the AC motor with applying the method therein .

### BRIEF DESCRIPTION OF THE SEVERAL VIEWS OF THE DRAWING

Fig. 1 is a block diagram for showing an outline configuration of an electric power conversation device, according to an embodiment 1 of the present invention;
Figs. 2A and 2B are waveforms views for showing inductive voltage of a motor and an output signal Pc from a voltage comparator portion, for explaining a detecting principle of a rotation direction of the motor in the embodiment 1 mentioned above;
Figs. 3A and 3B are operation explaining views for explaining the detecting principle, showing switching elements to be driven at a timing "t_{A}" and current running through an inverter from the motor at that time;
Figs. 4A and 4B are operation explaining views for explaining the detecting principle, showing the switching elements to be driven at a timing "t_{B}" and current running through the inverter from the motor at that time;
Fig. 5 is a flowchart diagram for showing an example of a detection method of rotation direction of the motor, according to the embodiment 1 mentioned above;
Fig. 6 is a flowchart diagram for showing an example of a determination process of the rotation direction, in the detection method of rotation direction of the motor shown in Fig. 5 mentioned above;
Fig. 7 is a block diagram for showing a partial configuration of the electric power conversation device, according to a variation of the embodiment 1 mentioned above;
Fig. 8 is a block diagram for showing a partial configuration of the electric power conversation device, according to another variation of the embodiment 1 mentioned above;
Fig. 9 is a block diagram for showing a partial configuration of the electric power conversation device, according to further other variation of the embodiment 1 mentioned above;
Figs. 10A and 10B are operation explaining views for explaining a detecting principle in the variation of the embodiment 1 mentioned above, showing the switching elements to be driven at the timing "t_{A}" and current at that time;
Figs. 11A and 11B are operation explaining views for explaining the detecting principle in the variation of the embodiment 1 mentioned above, showing the switching elements to be driven at the timing "t_{B}" and current at that time;
Fig. 12 is a view for showing a variation of a current detector within the variation of the embodiment 1 mentioned above;
Fig. 13 is a view for showing a further other variation of the current detector within the variation of the embodiment 1 mentioned above;
Fig. 14 is a block diagram for showing an outline configuration of an electric power conversation device, according to an embodiment 2 of the present invention;
Figs. 15A and 15B are operation explaining views for explaining the detecting principle in the variation of the embodiment 2 mentioned above, showing the switching elements to be driven at the timing "t_{A}" and current at that time;
Figs. 16A and 16B are operation explaining views for explaining the detecting principle in the variation of the embodiment 2 mentioned above, showing the switching elements to be driven at the timing "t_{B}" and current at that time;
Fig. 17 is a flowchart diagram for showing an example of the detection method of rotation direction of the motor, according to the embodiment 2 mentioned above; and
Fig. 18 is a block diagram for showing a partial configuration of the electric power conversation device of the motor, according to the embodiment 2 mentioned above.

### EMBODIMENT(S) FOR CARRYING OUT THE INVENTION

Hereinafter, explanation will be given on the embodiments according to the present invention, in the details thereof, by referring to the figures attached herewith.

### EMBODIMENT 1

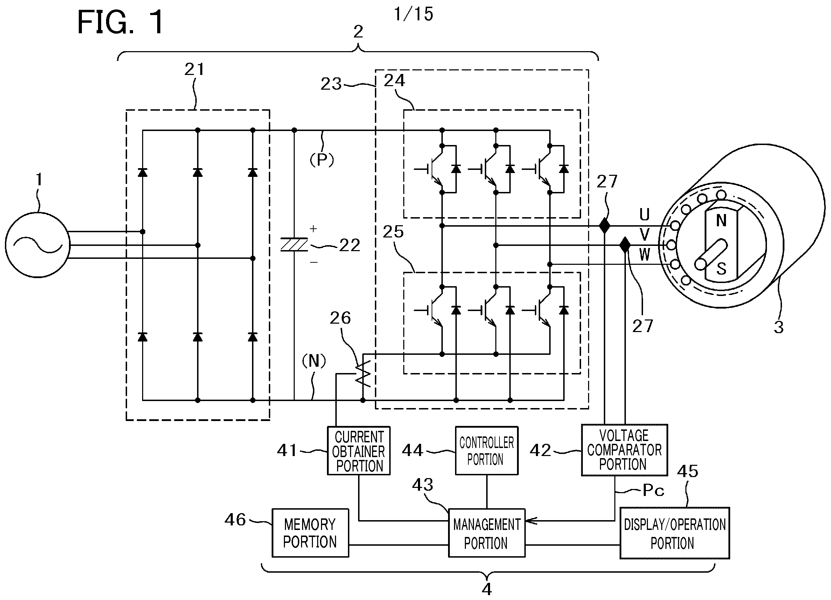

Explanation will be given on the details of a first embodiment (an embodiment 1), hereinafter, by referring to Figs. 1 to 13 attached herewith. However, in this embodiment 1, during the re-starting of an AC motor after generation of an abnormality, such as, the instantaneous electric power interruption, etc., the rotation direction of that AC motor is detected by utilizing a resistor, which is provided for detecting an amplitude of supply current, i.e., a **shunt** resistor, within an electric power conversion device for supplying AC electric power to that AC motor .

First of all, Fig. 1 attached herewith is a block diagram for showing an outline configuration of an electric power conversation device, according to the present invention, and in this figure, a reference numeral 1 depicts a commercial three-phase AC power source, for example, and the electric power conversion device 2 according to the present invention converts an electric power having a predetermined frequency from that power source 1 into a three-phase AC power having a variable frequency, so as to supply that three-phase AC power converted to an electric power conversion device 3 (i.e., this is a motor, and includes a synchronous motor therein) . Further, although this electric power conversion device is a three-phase AC motor applying a permanent magnet as a rotor thereof, as is apparent from the figure, however that motor is only one example, and it is apparent that the present invention should not be restricted to this, but may be applicable widely, including a three-phase AC motor disposing the permanent magnet(s) on a stator side thereof, for example.

And, as is apparent from the figure, the electric power conversion device 2 according to the present invention comprises a converter 21, which is constructed with plural numbers (i.e., six (6) pieces in the present example) of diodes, etc., a smoothing capacitor 22, an inverter 23. Further, the inverter 23 is constructed with pairs, each being disposed corresponding to U phase, V phase and W phase, respectively, i.e., six (6) pieces in total, of IGBTs, and those are illustrated as an upper-side arm 24 and a lower-side arm 25. Also, between the lower-side arm 25 building up the electric power conversion device 2 and a line of negative (N) side is connected the **shunt** resistor 26 mentioned above, as a current detector, and in a part of lines for supplying the three-phase AC power from the electric power conversion device 2 to the electric power conversion device 3, in the present example, on the U phase and the V phase are provided voltage detectors 27 and 27, respectively.

And, a controller/driver **portion** 4 is provided for driving the electric power conversion device 2 mentioned above, i.e., for controlling ON/OFF of the IGBTs, i.e., switching elements building up the inverter 23, and as is apparent from the figure, that controller/driver **portion** 4 comprises a current obtainer portion 41 for detecting current flowing through the **shunt** resistor 26, i.e., the current detector mentioned above, and a voltage comparator portion 42 for comparing detection signals from the voltage detectors 27 and 27, which are provide on the U phase and the V phase, respectively. Further, an output signal from this voltage comparator portion 42 is depicted by a mark "Pc" in the figure, and in this controller/driver **portion** 4 are further provided a management portion 43, with which the voltage comparator portion and the current obtainer portion are connected, and also a controller portion 4 is connected with that management portion. Further, with that management portion are connected a display/operation portion 45 and a memory portion 46. However, the current flowing through the **shunt** resistor 26 is taken into the current obtainer portion 41, in the form of voltage appearing between both ends of that resistor, for example, through an A/D converter or the like, which is mounted on a microcomputer (MCU) building up the controller portion mentioned above, etc., and thereafter is transmitted to the management portion 43 as a detection value. This detection value is, for example, transmitted to the memory portion 46 to be memorized therein.

The electric power conversion device 2, the detailed structures thereof being explained in the above, normally, drives/controls the motor 3 at a desired rotation speed and/or torque, when driving the motor 3, supplying the AC power from the power source 1 after converting it into the three-phase AC power having the variable frequency, by controlling ON/OFF of the plural numbers of IGBTs building up the inverter 23 mentioned above with an instruction given from the controller portion 44, in accordance with a vector control, etc. However, the present invention relates to, as was mentioned above, the re-starting of the AC motor after generation of the abnormality, such as, the instantaneous electric power interruption, etc., in the power source, and in particular, it relates to a technology for detecting the rotation direction of the AC motor, being detectable the rotation direction of that AC motor, quickly and correctly; for that reason, explanation of such operation (s) of the electric power conversion device 2 during the time when it operates normally, as was mentioned above, will be omitted, herein.

### <Principle for Detecting Rotation Direction Depending on Current Value Running through Electric Power Conversion Device>

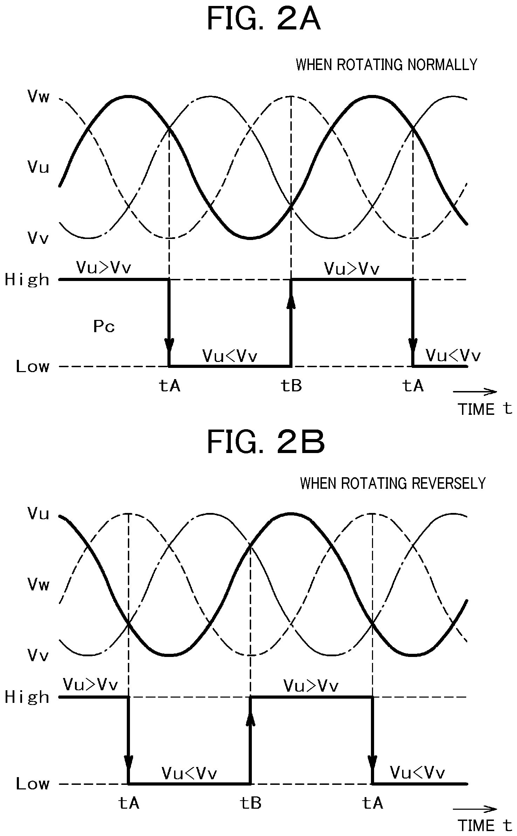

Following to the above, explanation will be given on a rotation direction detecting method for the AC motor, according to the present invention, i.e., behavior of the AC motor when it restarts after generation of the abnormality, such as, the instantaneous electric power interruption, etc., in the power source, by referring to Figs. 2A to 4B attached herewith.

First of all, in Fig. 2A are shown waveforms of the inductive voltages (Vu, Vv, Vw) from the motor and the output signal "Pc" from the voltage comparator portion 42 mentioned above, when the abnormality, such as, the instantaneous electric power interruption, etc., occurs in the power source, and as a result thereof, an output of the electric power conversion device 2 tries re-starting of the AC motor, after being stopped, once, for example, under the condition where that AC motor 3 rotates normally (i.e., rotating into the direction same to the rotation direction when it is driven), due to the inertia, etc., just after stopping thereof. On the other hand, in Fig. 2B are shown waveforms of the inductive voltages (Vu, Vv, Vw) from the motor and the output signal "Pc" from the voltage comparator portion 42 mentioned above, under the condition where that AC motor 3 rotates reversely (i.e., rotating into the direction opposite to the rotation direction when it is driven), because of a backlash of the fan, etc., which is attached on the motor, for example. Further, in those figures, the time is indicated **on the horizontal axis** thereof, respectively. Also, in the present example, it is assumed that the comparator portion 42 mentioned above is so constructed that it outputs a signal of "High" level when the voltage "Vu" of U-phase is larger than the voltage "Vv" of V-phase (Vu>Vv), while it outputs a signal of "Low" level when the voltage "Vu" of U-phase is smaller than the voltage "Vv" of V-phase (Vu<Vv) . However, the structure of this comparator portion 42 should not be restricted to this; on the contrary to the above-mentioned, it may be so constructed that it outputs the signal of "Low" when Vu>Vv, while it outputs the signal of "High" when Vu<Vv, reversely.

As is apparent from those figures, the inductive voltages (Vu, Vv, Vw) from the motor change like a sinusoidal-wave accompanying with elapse time, and the output signal "Pc" of the voltage comparator portion 42 changes the signal level thereof from "High" to "Low", and from "Low" to "High", successively, on a boundary of the time point when the voltage "Vu" of U-phase and the voltage "Vv" of V-phase intersect each other (Vu=Vv) . However, among the inductive voltages (Vu, Vv, Vw) "when rotating normally" in Fig. 2A and "when rotating reversely" in Fig. 2B, with respect to the voltage "Vv" of V-phase, the voltage "Vu" of U-phase and the voltage "Vw" of W-phase are made different, in the phases thereof, from each other, in the reversed directions thereof (i.e., "when rotating normally", the voltage "Vu" of U-phase is retarded by 2π/3 with respect to the voltage "Vv" of V-phase, while "when rotating reversely", it is advanced by 2π/3).

As a result thereof, the output signal "Pc" of the comparator portion 42 changes the level thereof, from "High" to "Low", or from "Low" to "High", at the time point when the inductive voltages "Vu" and "Vv" intersect (Vu=Vv), and herein, it is assumed that, in particular, the time **point** (timing) when the level of the output signal "Pc" changes from "High" to "Low" (from Vu>Vv to Vu<Vv) is "t_{A}", and the time **point** (timing) when it changes from "Low" to "High" (from Vu<Vv to Vu>Vv) is "t_{B}".

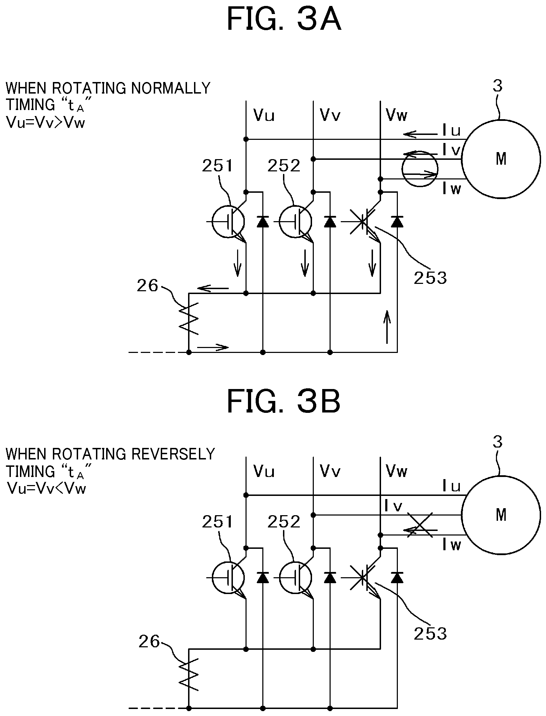

Next, in Figs. 3A and 3B are shown the lower-side arm 25 building up the inverter 23 of the electric power conversion device 2, in particular, IGBTs 251, 252 and 253, being three (3) pieces of switching elements building up that arm, together with the shunt resistor 26, as well as, the inductive voltages (Vu, Vv, Vw) and the currents (Iu, Iv, Iw) of the motor 3 mentioned above, at the timing "t_{A}".

In particular, Fig. 3A shows the condition where the motor rotates normally. In this case, at the timing "t_{A}" mentioned above, the inductive voltages (Vu, Vv, Vw) from the motor mentioned above are Vu=Vv>Vw, and for that reason, if controlling the lower-side arm 25, selectively, in more details, if turning the IGBTs 251 and 252 of the U-phase and the V-phase ON, while turning the IGBT 253 of the remaining W-phase OFF, then as shown by arrows in the figures, backflow or freewheeling current flows through the shunt resistor 26, as well as, the inverter 23.

On the other hand, Fig. 3B shows the condition where the motor rotates reversely, and in this case, at the timing "t_{A}" mentioned above, the inductive voltages (Vu, Vv, Vw) from the motor mentioned above are Vu=Vv<Vw, and for that reason, no freewheeling current flows, even if turning the IGBTs 251 and 252 of the U-phase and the V-phase ON, while the IGBT of the remaining W-phase OFF, similar to the mentioned above, and therefore no voltage is generated between both ends of the **shunt** resistor 26.

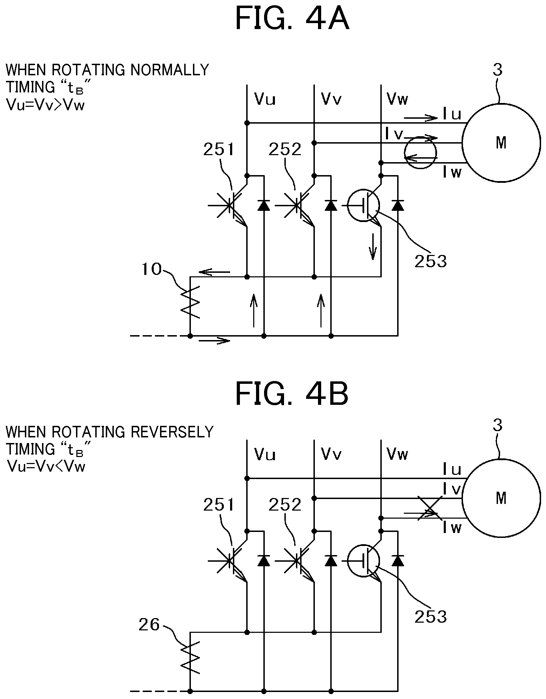

Also, in Figs. 4A and 4B are shown the lower-side arm 25 building up the inverter 23 of the electric power conversion device 2, in particular, IGBTs 251, 252 and 253, being three (3) pieces of switching elements building up that arm, together with the shunt resistor 26, as well as, the inductive voltages (Vu, Vv, Vw) and the currents (Iu, Iv, Iw) of the motor 3 mentioned above, at the timing "t_{B}".

Thus, at this timing "t_{B}", as is shown in Fig. 4A, when the motor rotates normally, the freewheeling current flows through the **shunt** resistor 26, as well as, the inverter 23, if turning the IGBTs 251 and 252 of the U-phase and the V-phase ON, while turning the IGBT 253 of the W-phase OFF; however, no such current flows through, when the motor rotates, reversely (see Fig. 4B).

Then, according to the present invention, at the timing "t_{A}" and/or the timing "t_{B}" mentioned above, the lower-side arm 25 building up the inverter 23 of the electric power conversion device 2 is driven, selectively, in accordance with such patterns as shown in Figs. 3A and 3B and/or Figs. 4A and 4B (hereinafter, being called a "driving pattern of Figs. 3A and 3B" or a "driving pattern of Figs. 4A and 4B"), and at that time, determination is made on whether the freewheeling current from the motor flows through the **shunt** resistor 26 or not; thereby determining on whether that motor 3 is in the condition of normal rotation or in the condition of reverse rotation. However, with such principle as was mentioned above, although it is possible to determine the normal rotation or the reverse rotation of the motor 3, only at one (1) timing (i.e., at the timing "t_{A}" or the timing "t_{B}") after re-starting the operations of the electric power conversion device 2, but the rotation speed of that motor 3 can be fluctuated, easily, in particular, when driving current is stopped, so that an amplitude of the freewheeling current flowing through the **shunt** resistor 26 can be largely changed, easily. For this reason, with conduction of the determination mentioned above, at plural numbers of timings, it is possible to determine on whether the motor rotates normally, or reversely, with much certainty thereof. However, at that instance, the determination mentioned above may be made only at the timing "t_{A}" or the timing "t_{B}", or may be made by plural numbers of times, or may be made by plural numbers of times including the both the timing "t_{A}" and the timing "t_{B}".

However, in the detecting operation mentioned above, the rotation direction of the motor is detected depending on the amplitude of the current freewheeling through the motor 3 and the lower-side arm 25, while operating only the switching elements (i.e., three (3) pieces of IGBTs 251, 252 and 253) building up the lower-side arm 25 connected with the "N" side, selectively, and at this instance, it is important not to operate the upper-side arm 24 connected with a P (positive) side. This is because, when operating the upper-side arm 24 connected with the "P" side, at the same time, a large braking force is applied on the motor, and then excessive current flows in the motor through the smoothing capacitor 22. Thus, the reason of operating only the lower-side arm 25 connected with the "N" side is to detect the current freewheeling from the motor through the lower-side arm 25 by the current detector 24.

### <Detection Method of Rotation Direction>

Following to the above, explanation will be given, hereinafter, about a method for detecting (or determining) the rotation direction (e.g., normal direction/reverse direction) of the motor, actually, with the detection principle, the details of which are mentioned in the above, by referring to a flowchart attached herewith. However, in a method, which will be shown hereinafter, as an example thereof, explanation will be made on an example of determining (detecting) the rotation direction (e.g., the normal direction/reversedirection) of the motor, by conducting the determination mentioned above at the timing "t_{A}" and the timing "t_{B}", three (3) times. Also, processes, which will be mentioned hereinafter, are executed by the microcomputer (MCU) or the like, building up the controller portion of the driver portion 4 shown in Fig. 1 in the above, etc., and software for that purpose is assumed to be stored within a memory building up that microcomputer or an external memory thereof, in advance.

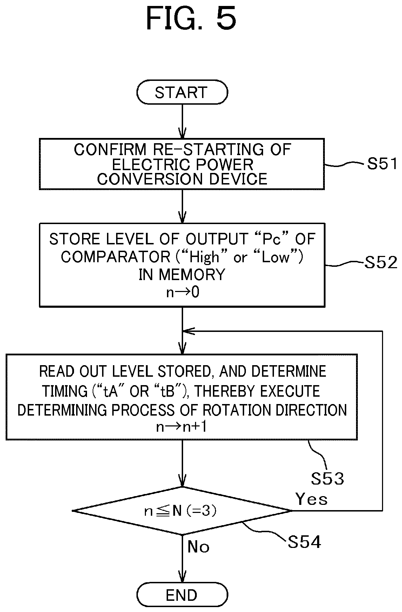

Firstly, in case where the re-starting is executed after the output of the electric power conversion device 2 is stopped, once, the following processes will be conducted, in accordance with the flows shown in Fig. 5. However, herein, for the purpose of easy explanation thereof, the explanation will be given on the case where the lower-side arm 25 of the inverter is driven, in accordance with a driving pattern shown in Figs. 3A and 3B, hereinafter.

When starting the processes, first of all, it is confirmed that the electric power conversion device 2 is in a condition of starting the operation again (i.e., restarting) (S51), and next, the level (i.e., "High" or "Low") of the output "Pc" from the comparator portion 42, which compares the detection signals from the voltage detector portions 27 and 27, for detecting the U-phase and the V-phase of the motor 3 mentioned above, is stored within the memory building up that microcomputer or the external memory thereof, for example, and further a number of times "n" of processing is set to zero (0) (S52); then the process is ended.

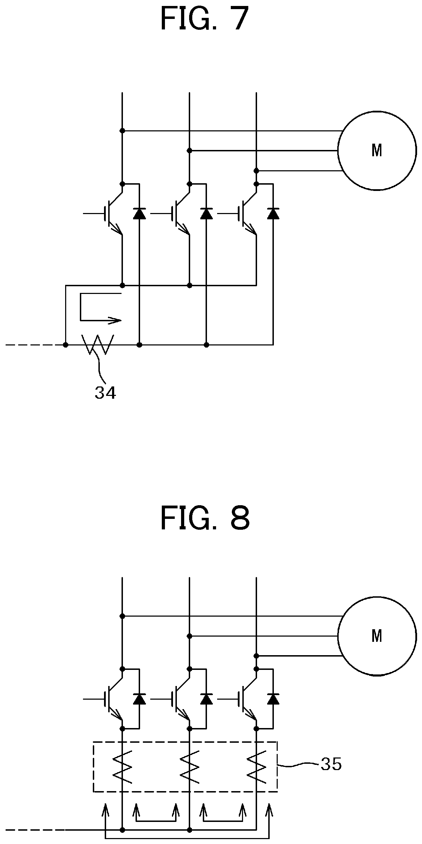

Thereafter, at the time point where the output "Pc" from the voltage comparator portion 42 mentioned above reverses the level thereof, determination is made on whether that timing is the timing "t_{A}" or the timing "t_{B}". Thus, while reading out the level (i.e., "High" or "Low") of the output "Pc" from the comparator portion 42, which is stored in the above, it is determined to be the timing "t_{A}" if this level of the output "Pc" stored is "High", on the other hand, to be the timing "t_{B}" if the level of the output "Pc" stored is "Low". And, hereinafter, a determining process of the rotation direction of the motor, which will be shown in Fig. 7, is executed, and then the value of "n" is incremented by only "1" (n→n+1) (S53).

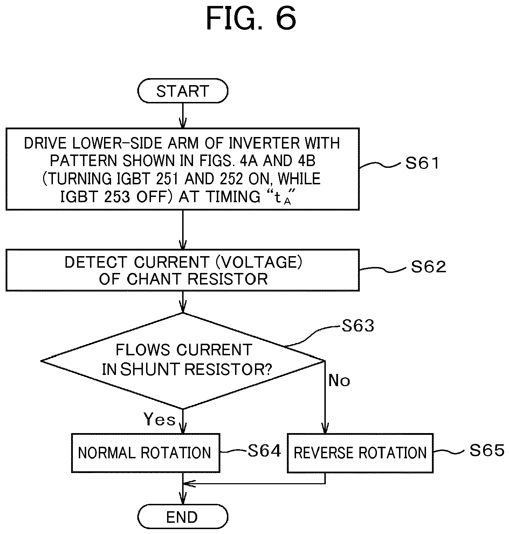

Herein, explanation will be given on the determining of the rotation direction of the motor, in accordance with the flow shown in Fig. 6 attached herewith. When the process is started, first of all, the lower-side arm 25 of the inverter is driven (S61), with the driving pattern shown in Figs. 3A and 3B mentioned above, at the time point when coming up to the timing "t_{A}". Thus, the IGBTs 251 and 252 are tuned ON, while the IGBT 253 of W-phase is OFF. Next, detection is made on the voltage appearing across the both ends of the **shunt** resistor 26 (S62), and thereafter, it is determined if the freewheeling current from the motor, exceeding a predetermined value, flows into the **shunt** resistor 26 or not (S63), through comparison of this voltage with a predetermined value. As a result thereof, if the current flows in the **shunt** resistor 26 (see "Yes" in the figure), the motor is determined to be in condition of the normal rotation, on the other hand, if no current flows in the **shunt** resistor 26 (see "No" in the figure), the motor is determined to be in condition of the reverse rotation (S65), and thereafter completing the process. Or, in the place of the determination mentioned above, a current value of the **shunt** resistor 26 (in more details, a voltage value appearing across the both ends thereof) may be reserved, once, within the memory or the like.

And, again, turning back to Fig. 5, the rotation direction is determined by repeating the process mentioned above (S54), which is shown in Fig. 6, by plural numbers of times, for example, N= 3 times, then the process is completed. However, in accordance with the present invention, the determination of the rotation direction of the motor should not be restricted to the method mentioned above, and other structures or methods may be applicable in the similar manner.

For example, in Figs. 7 and 8 a current detector 34, or plural numbers of current detectors 35, being connected in parallel, is/are applied, in the place of the **shunt** resistor 26 mentioned above; i.e., as is shown by the figure, it is possible to determine the rotation direction of the motor, in the manner similar to that mentioned above, by disposing it/them at the position of the lower-side arm of the inverter.

However, in the explanation given in the above, although the timing for executing the determining process of rotation direction of the motor is set up with using the inductive voltages of the U-phase and the V-phase, in particular, but the present invention should not be restricted to this, and a part of the three (3) phases may be utilized, for example, the U-phase and the W-phase, or the V-phase and the W-phase. However, in that case, for the person skilled in the art, it is apparent that also the switching elements (i.e., theIGBTs) of the upper-side arm 24 or the lower-side arm 25 would be determined, appropriately, corresponding to those phases to be utilized.

### <Variation>

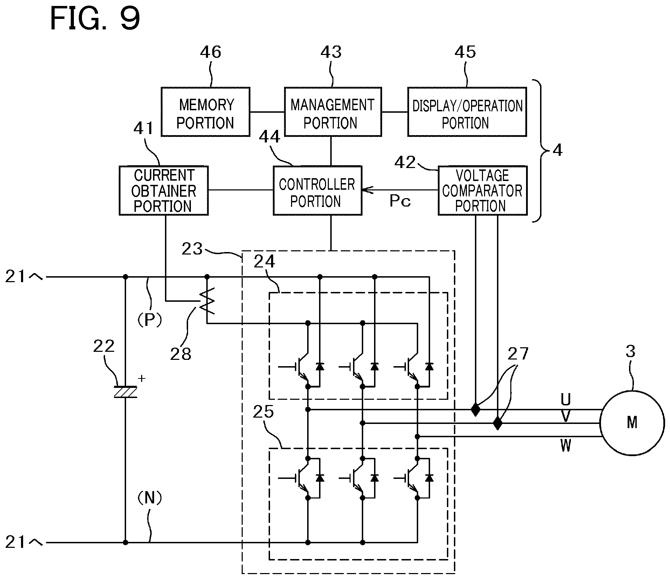

Additionally, a variation of the embodiment 1 mentioned above will be shown by referring to Figs. 9 to 12. However, in this variation, first of all, as is apparent in Fig. 9, the upper-side arm 24 there is applied, inparticular, in the place of the lower-side arm 25 of the inverter 23 building up the electric power conversion device 2 shown in Fig. 1 mentioned above, and for that reason, the current detector (i.e., the **shunt** resistor) 28 is connected with the upper-side arm 24. However, other structures than that are almost similar to those mentioned in the above, and therefore the detailed explanations thereof will be omitted herein.

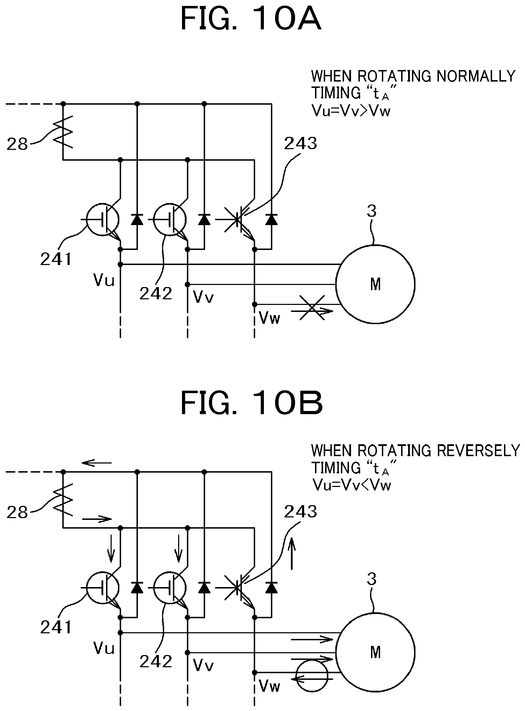

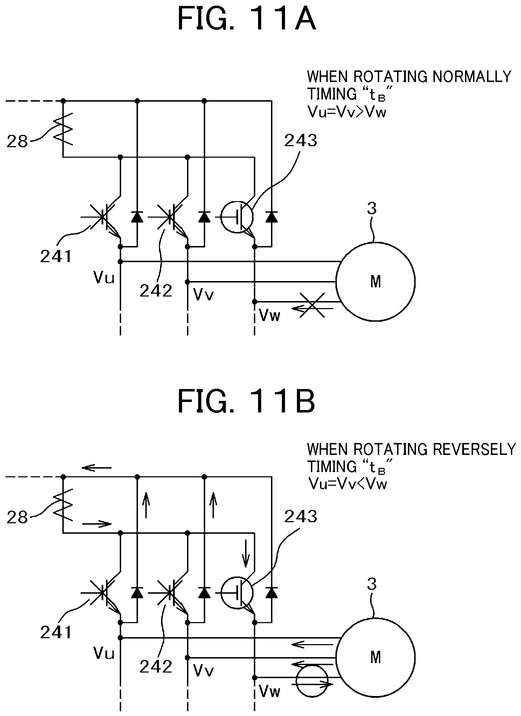

Further, in Figs. 10A and **10B** are shown the condition where the IGBTs 241 and 242 of the U-phase building up the upper-side arm 24 are turned ON while the IGBT 243 of the W-phase is OFF, at the timing "t_{A}", in particular, in this embodiment. At this timing "t_{A}", as was mentioned in the above, since the three (3) phases inductive voltages of the motor are Vu=Vv<Vw, then as is shown in Fig. 10A, current tries to flow from the U-phase and the V-phase of the synchronous motor 3 and into the W-phase thereof, via the IGBTs 241 and 242, which are in the ON condition; however, since the IGBT of the W-phase is in the OFF condition, no freewheeling current flow therein; thus, current flowing through the current detector (i.e., the **shunt** resistor) 28 is almost zero (0). On the other hand, when the motor 3 rotates reversely, as is shown in Fig. 10B, current flows from the U-phase and the V-phase towards to the W-phase. Also, in Figs. 11A and 11B are shown flows of the current at the timing "t_{B}" mentioned above, in particular.

In this manner, also in this variation, it is possible to determine the rotation condition of the motor 3 when the electric power conversion device 2 re-starts, i.e., to be in the condition of normal rotation or in the condition of reverse rotation; in the similar manner to that mentioned in the above, by driving the upper-side arm 24 building up the inverter 23 of the electric power conversion device 2, selectively, in accordance with such patterns as shown in Figs. 10A and 10B (corresponding to the driving pattern shown in Figs. 4A and 4B mentioned above) or Figs. 11A and 11B (corresponding to the driving pattern shown in Figs. 5A and 5B mentioned above), at the timing "t_{A}" and/or the timing "t_{B}" mentioned above, and by detecting the current flowing through the current detector (i.e., **shunt** resistor) 28 at that time.

Further, in this variation, similar to that mentioned above, the detection (or determination) of the **rotation** direction (i.e., the normal rotation/reverse rotation) of the motor may be made by only one (1) time, or this may be made by plural numbers times. Also, as a detailed detecting (or determining) method in that instance can be utilized the processes similar to those shown in Figs. 3A to 4B mentioned above

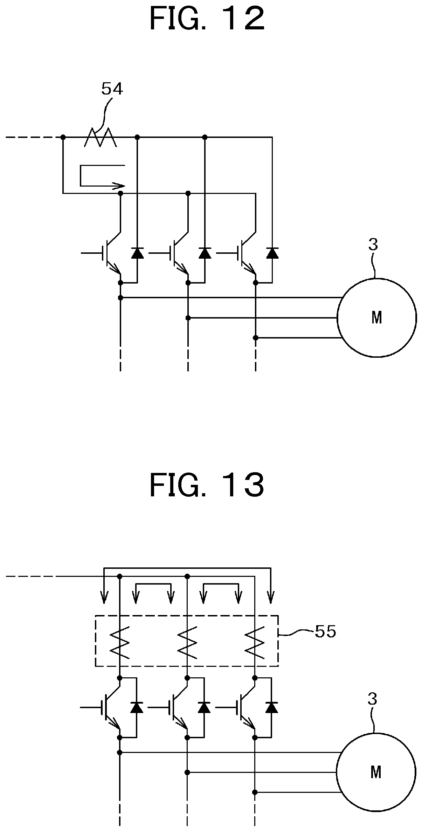

Additionally, those shown in Figs. 12 and 13 apply a current detector 54, or plural numbers of current detectors 55, as is shown in the figures, by positioning it/them at the position of the upper-side arm of the inverter, it is possible to determine the rotation direction of the motor, in the similar manner to that mentioned above.

### Embodiment 2

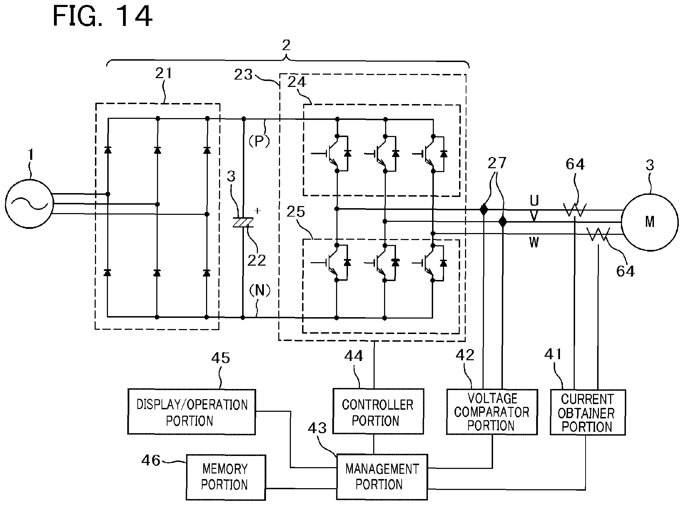

Next, explanation will be given on other embodiment (an embodiment 2) of the present invention, hereinafter, by referring to Figs. 14 to 18 attached herewith. However, this embodiment 2 detects the rotation direction due to the inertia of that AC motor, depending on the direction of current running from the motor when either one of the upper-side arm 24 and the lower-side arm 25, building up the inverter 23 of the electric power conversion device 2, during the time when the AC motor re-starts, after generation of the abnormality, such as, the instantaneous electric power interruption, etc.

FIG. 14 attached herewith is a block diagram showing the circuit configuration of an electric power conversion device according to an embodiment 2 of the present invention. In this figure, constituent elements similar to those shown in Fig. 1 mentioned above are indicated with the same reference numerals, and explanations thereof will be omitted herein. As is apparent from FIG. 14, the electric power conversion device according to the embodiment 2 has such a construction that the current detector (i.e. a shunt resistor) 26 building up a part of the inverter in FIG. 1 is omitted, and in its place are provided AC current detectors 64, for detecting current between the AC motor 3 and the inverter 23, in particular U-phase current and W-phase current and the respective directions thereof. Furthermore, detection signals from the current detectors 64 are input into the current obtainer portion 41.

Further, the AC current detectors 64 are constructed with a Hole CT, for example, or may be constructed with a shunt resistor, for each, and are disposed in circuits for detecting the currents of the U-phase and the W-phase of the synchronous motor 3. The values of currents detected by those, together with the directions thereof, are taken into the current obtainer portion 41, via an A/D converter, etc., mounted on the microcomputer (MCU) building up the controller portion mentioned above, and thereafter is transferred to the management portion 43, etc. However, the operations and functions for the electric power conversion device by such construction are similar to those of the device shown in Fig. 1 mentioned above; therefore, will be omitted herein. Also, in the explanation, which will be given hereinafter, with the current flowing between the AC motor 3 and the inverter 23, it is assumed that the current flowing from the inverter 23 towards to the AC motor 3 is that in a normal direction, while the current flowing from the AC motor 3 towards to the inverter 23 is that in a reverse direction.

### <DetectionPrinciple of Rotation Direction Depending on Direction of Current from Motor>

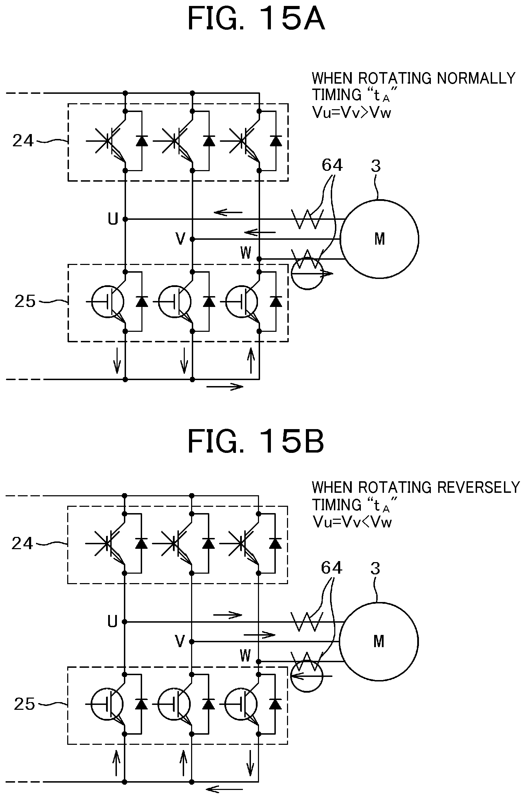

Herein, explanation will be given on a principle for detecting the rotation direction in the electric power conversion device, according to the embodiment 2 of the present invention, by referring to Figs. 15A to 16B. However, in those figures is shown a method for detecting the rotation direction of the motor, while operating (i.e., turning ON) either all of the switching elements of the upper-side arm 24 connected with the "P" side (i.e., "+" side) or all of the switching elements of the lower-side arm 25 connected with the "N" side (i.e., "-" side).

However, in this instance, it is important that no switching element of the lower-side arm 25 is operated, when operating the switching elements of the upper-side arm 24. This is because, if operating the upper-side arm and the lower-side arm at the same time, a large braking force is applied onto the motor, and also excessive current results to flow, passing through the motor passing through the smoothing capacitor 22. And, by driving only either one of the switching elements of the upper-side arm 24 connected with the "P" side or the switching elements of the lower-side arm 25 connected with the "N" side, it is possible to detect the freewheeling between the motor and the inverter by the AC current detectors 64 and 64, not passing through the smoothing capacitor 22.

Fig. 15A shows the condition, at the timing "t_{A}", the details of which is mentioned in Fig. 2 in the above, where all of the switching elements of the lower-side arm 25 connected with the "N" side are turned ON while all of the switching elements of the upper-side arm 24 connected with the "P" side are OFF, in particular, under the condition of normal rotation of the motor. At this timing "t_{A}", since Vu=Vv>Vw, as is shown by arrows in the figure, current flows out from the U-phase and the V-phase of the motor 3, and flows into towards the W-phase. Thus, at this timing "t_{A}", polarity of the AC current flowing between the motor and the inverter comes to be negative (i.e., flowing out from the motor) on the U-phase and the V-phase, and comes to be positive (i.e., flowing into the motor) on the W-phase . On the other hand, Fig. 15B shows the condition where the motor rotates reversely, and in this instance, since Vu=Vv<Vw, as is shown in the figure, current flows out from the W-phase of the motor 3, and flows into through the U-phase and the V-phase. Thus, it comes to positive current on the U-phase and the V-phase, and negative current on the W-phase, respectively.

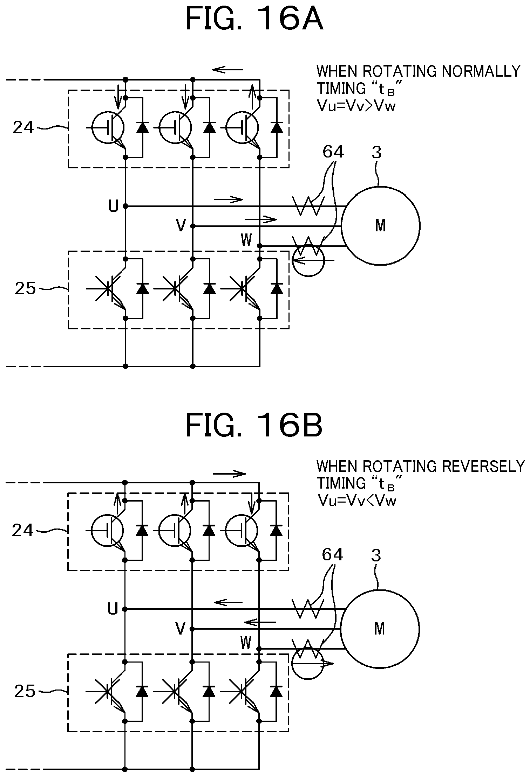

Following to the above, Fig. 16A shows the condition, at the timing "t_{B}" different from that mentioned above, where all of the switching elements of the upper-side arm 24 connected with the "P" side are turned ON while all of the switching elements of the lower-side arm 25 connected with the "N" side are OFF, in particular, under the condition of normal rotation of the motor. At this timing "t_{B}", since Vu=Vv<Vw, as is shown by arrows in the figure, current flows out from the W-phase of the motor 3, and flows into towards the V-phase the U-phase thereof. Thus, at this timing "t_{B}", polarity of the AC current flowing between the motor and the inverter comes to be positive (i.e., flowing into the motor) on the U-phase and the V-phase, and comes to be negative (i.e., flowing out from the motor) on the W-phase. On the other hand, Fig. 16B shows the condition where the motor rotates reversely, and in this instance, since Vu=Vv>Vw, as is shown in the figure, current flows out from the U-phase and the V-phase of the motor 3, and flows into through the W-phase. Thus, it comes to negative current in the U-phase and the V-phase, and positive current in the W-phase, respectively.

Then, according to the present embodiment 2, paying an attention upon such changing of the polarity of the AC current flowing between the motor and the inverter as mentioned above, and utilizing this therein, it is possible to detect the rotation direction of that motor after generation of the abnormality, such as, the instantaneous electric power interruption, etc. Thus, at the timing "t_{A}" or the timing "t_{B}", all of the switching elements of the upper-side arm 24 or the lower-side arm 25, building up the inverter 24, are turned ON. And, through detecting the directions of current flowing into the U-phase and current flowing into the W-phase, by means of a pair of AC current detectors 64 and 64, it is possible to detect the rotation direction of the motor. However, with such principle as mentioned above, though possible to determine the normal rotation or the reverse rotation of the motor 3 at only one (1) timing (i.e., at the timing "t_{A}" or the timing "t_{B}") after re-starting the operation of the electric power conversion device 2, however doing this by plural numbers of times would enable to make the determination with much certainty . Further, in that instance, it is obvious for the person skilled in the art to do the determination mentioned above, by plural numbers of times, only at the timing "t_{A}" or the timing "t_{B}", or to do by the plural numbers of times, including both the timing "t_{A}" and the timing "t_{B}" therein.

### <Detecting Method of Rotation Direction>

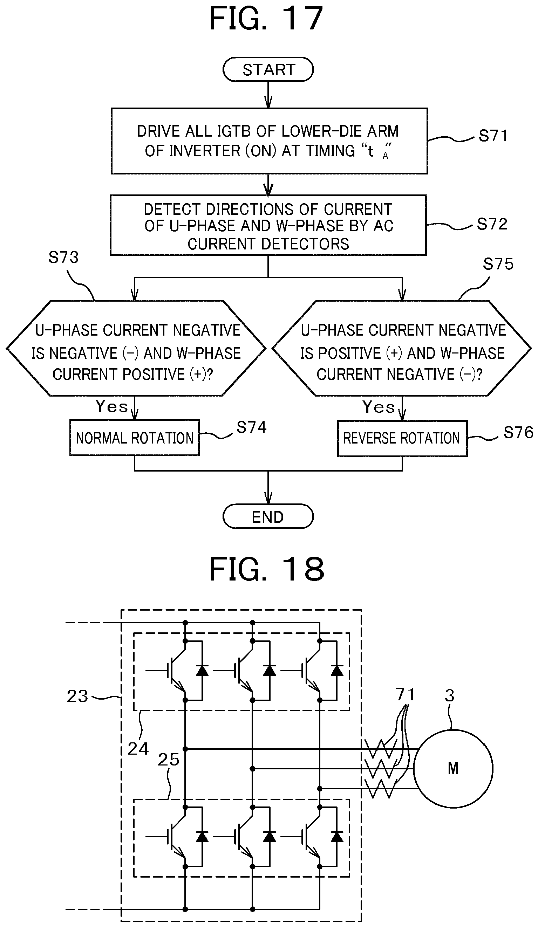

Further, also when applying the method for detecting the rotation direction, according to the present embodiment 2 mentioned above, it can be executed in the similar manner to that mentioned above (see the flows shown in Figs. 5 and 6 mentioned above) ; however, herein, explanation will be given, in particular, on a process substituting for the process shown in Fig. 6 mentioned above, in more details thereof, by referring to Fig. 17, hereinafter.

However, also in the present example, when the process starts, following the flow shown in Fig. 5 mentioned above, confirmation is made on the re-opening condition of the operation (i.e., the re-starting) (S51), while storing the level (i.e., "High" or "Low") of the output "Pc" from the voltage comparator portion 42 in the memory, and then the number of times "n" is set to zero (0) (S52) . Thereafter, in a step S53 is determined if it is the timing "t_{A}" or the timing "t_{B}", and thereafter, the process shown in Fig. 17, which will be mentioned hereinafter, is executed.

Thus, for example at the timing "t_{A}", the IGBTs 251 to 253, building up the lower-side arm of the inverter 24 mentioned above, are turned ON (S71). Following to that, detection is made on the directions of current (i.e., the polarity) of the U-phase and the W-phase, which are detected by the pair of AC current detectors 64 and 64 (S72). Thereafter, depending on combinations of those directions of current (i.e., the polarities) of the U-phase and the W-phase, which are detected, determination is made on the rotation direction of the motor. Thus, as was mentioned above, in case where the detected current of the U-phase is negative (-) and the current of the W-phase is positive (+) (i.e., "Yes" in S73), the rotation direction of the motor is determined to be the normal rotation (S74), while in case where the current of the U-phase is positive (+) and the current of the W-phase is negative (-) (i.e., "Yes" in S75), it is determined to be the reverse rotation (S76), and the process is completed. Thus, with the combinations of the directions of the freewheeling current, which are detected in plural numbers of current paths, it is possible to determine (or detect) the rotation direction of the motor, with certainty.

Additionally, in Fig. 18 attached herewith is shown a variation of the embodiment 2 mentioned above, and in this variation, as is apparent in the figure, there is further provided such AC current detectors 71, as was mentioned above, as well as, on the V-phase, in addition to the U-phase and the W-phase mentioned above, in the current paths between the motor 3 and the inverter 24. Furthermore, also in this variation, it is same to that mentioned above, i.e., the freewheeling current is produced between the motor and the inverter, by driving the upper-side arm or the lower-side arm, building up the inverter 24 mentioned above, selectively, so as to detect the directions (i.e., the polarities) of those currents by means of the AC current detectors 71, and thereby determining the rotation direction of the motor.

### EXPLANATION OF MARKS

1...AC power source, 2...electric power conversion device, 21...converter, 22...smoothing capacitor, 23...inverter, 24...upper-side arm, 25...lower-side arm, 26...current detector portion (shunt resistor), 27...voltage detector portion, 3...AC motor, 4...control/driveportion, 45...display/operationportion, 46...memory portion, 34, 35, 54, 55...current detector portion, 64, 71...AC current detector

## Claims

1. A method for detecting rotation direction of an AC motor (3), when supplying a three-phase AC electric power to said AC motor (3), after stoppage of an output thereof, in an electric power conversion device (2), comprising a smoothing capacitor (22) for smoothing an electric power to be supplied from an electric power source (1), and an inverter (23) for inverting a DC electric power from said smoothing capacitor (22) into a three-phase AC electric power having a desired frequency thereof, thereby supplying said inverted AC electric power having the desired frequency to said AC motor (3), comprising the following steps of:
detecting a timing when AC voltages of two phases selected from three-phase AC inductive electric power from said AC motor (3) intersect with each other;
forming a flow path for freewheeling current only between said inverter (23) and said AC motor (3), with the inductive electric power of said AC motor (3), by driving part of switching elements building up said inverter, selectively, at that timing detected, by:
turning the switching elements ON, selectively, corresponding to said two phases selected, while turning the switching element corresponding to the other one phase OFF, from the switching elements of three phases building up said upper-side arm (24) and said lower-side arm (25), when driving said inverter (23) at that timing; or
turning the switching elements OFF, selectively, corresponding to said two phases selected, while turning the switching element corresponding to the other one phase ON, from the switching elements of three phases building up said upper-side arm (24) and said lower-side arm (25), when driving said inverter (23) at that timing;
detecting the freewheeling current flowing through said flow path formed; and thereafter
determining the rotation direction after stoppage of the output of said electric power conversion device (2), depending on that freewheeling current detected;
wherein the rotation direction after stoppage of the output of said electric power conversion device (2) is determined depending on amplitude of the freewheeling current detected at that timing and
wherein the switching elements of an upper-side arm (24) or a lower-side arm (25) building up said inverter (23) are driven, selectively, when driving said inverter (23) at that timing.

2. The detecting method for rotation direction of the AC motor (3), as described in the claim 1, wherein detection of said freewheeling current is made by a shunt resistor (26), which is provided within said inverter (23).

3. The detecting method for rotation direction of the AC motor (3), as described in the claim 1, wherein the rotation direction after stoppage of the output of said electric power conversion device (2) is determined, by conducting detection of amplitude of that freewheeling current a predetermined number of times.

4. The detecting method for rotation direction of the AC motor (3), as described in the claim 1, wherein the rotation direction after stoppage of the output of said electric power conversion device (2) is determined, depending on direction of that freewheeling current, which is detected at that timing mentioned above.

5. The detecting method for rotation direction of the AC motor (3), as described in the claim 4, wherein all switching elements of said upper-side arm (24) or said lower-side arm (25), building up said inverter (23), are driven, when driving said inverter (23) at that timing.

6. The detecting method for rotation direction of the AC motor (3), as described in the claim 4, wherein detection of the freewheeling current at that timing is conducted in plural numbers of current paths between said AC motor (3) and said inverter (23) .

7. The detecting method for rotation direction of the AC motor (3), as described in the claim 6, wherein the rotation direction after stoppage of the output of said electric power conversion device (2) is determined, depending on combinations of directions of the freewheeling current, which are detected in the plural numbers of flow paths at that timing.

8. An electric power conversion device (2) for an AC motor (3), comprising:
a smoothing capacitor (22) for smoothing an electric power to be supplied from an electric power source (1);
an inverter (23) for inverting a DC electric power from said smoothing capacitor (22) into a three-phase AC electric power having a desired frequency thereof; and
a control/drive portion (4), which is configured to drive/control switching elements building up said inverter, thereby supplying said inverted AC electric power having said desired frequency thereof to said AC motor (3), further comprising
a means for detecting a timing when AC voltages of two phases selected from three-phase AC inductive electric power from said AC motor (3) intersect with each other, wherein
said control/drive portion (4) forms a flow path for freewheeling current only between said inverter (23) and said AC motor (3), with the inductive electric power of said AC motor (3), by driving part of switching elements building up said inverter, selectively, at that timing detected, by:
turning the switching elements ON, selectively, corresponding to said two phases selected, while turning the switching element corresponding to the other one phase OFF, from the switching elements of three phases building up said upper-side arm (24) and said lower-side arm (25), when driving said inverter (23) at that timing; or
by turning the switching elements OFF, selectively, corresponding to said two phases selected, while turning the switching element corresponding to the other one phase ON, from the switching elements of three phases building up said upper-side arm (24) and said lower-side arm (25), when driving said inverter (23) at that timing
wherein said control/drive portion (4) further determines the rotation direction after stoppage of the output of said electric power conversion device (2), depending on that freewheeling current detected, when supplying the three-phase AC electric power to said AC motor (3), again, after stoppage of an output of said electric power conversion device (2);
wherein said control/drive portion (4) determines the rotation direction after stoppage of the output of said electric power conversion device (2), depending on amplitude of the freewheeling current detected at that timing; and
wherein said control/drive portion (4) drives the switching elements of an upper-side arm (24) or a lower-side arm (25) building up said inverter (23), selectively, when driving said inverter (23) at that timing.

9. The electric power conversion device (2) for the AC motor (3), as described in the claim 8, wherein a shunt resistor (26) for conducting detection of said freewheeling current is provided within said inverter (23).

10. The electric power conversion device (2) for the AC motor (3), as described in the claim 8, wherein said control/drive portion (4) determines the rotation direction after stoppage of the output of said electric power conversion device (2) by conducting detection of amplitude of the freewheeling current a predetermined number of times.

11. The electric power conversion device (2) for the AC motor (3), as described in the claim 8, wherein said control/drive portion (4) determines the rotation direction after stoppage of the output of said electric power conversion device (2), depending on direction of that freewheeling current, which is detected at that timing mentioned above.

12. The electric power conversion device for the AC motor, as described in the claim 8, wherein said control/drive portion drives all switching elements of said upper-side arm or said lower-side arm building up said inverter, when driving said inverter at that timing.

13. The electric power conversion device (2) for the AC motor (3), as described in the claim 8, further comprising plural numbers of AC current detectors on current paths between said AC motor (3) and said inverter (23), wherein said control/drive portion (4) determines direction of the freewheeling current after stoppage of the output of said electric power conversion device (2), depending on the direction of the freewheeling current, which is detected by said detector at that timing.

14. The electric power conversion device (2) for the AC motor (3), as described in the claim 8, wherein said control/drive portion (4) determines the rotation direction after stoppage of the output of said electric power conversion device (2), depending on combinations of directions of the freewheeling current, which are detected on the plural numbers of current paths at that timing.

## Patentansprüche

1. Verfahren zur Detektion einer Rotationsrichtung eines Wechselstrommotors (3), wenn in einer elektrischen Leistungsumwandlungsvorrichtung (2) dem Wechselstrommotor (3) eine elektrische Dreiphasenwechselstromleistung nach Anhalten einer Ausgangsleistung derselben zugeführt wird, umfassend einen Glättungskondensator (22) zum Glätten einer elektrischen Leistung, die von einer elektrischen Leistungsquelle (1) zuzuführen ist, und einen Wechselrichter (23) zum Wechselrichten einer elektrischen Gleichstromleistung aus dem Glättungskondensator (22) in eine elektrische Dreiphasenwechselstromleistung, die eine Soll-Frequenz derselben aufweist, wodurch die wechselgerichtete elektrische Wechselstromleistung mit der Soll-Frequenz dem Wechselstrommotor (3) zugeführt wird, umfassend die folgenden Schritte:
Detektieren eines Zeitpunkts, in dem sich Wechselspannungen von zwei, aus einer induktiven elektrischen Dreiphasenwechselstromleistung aus dem Wechselstrommotor (3) ausgewählten Phasen überschneiden;
Bilden eines Strömungspfads für Freilaufstrom nur zwischen dem Wechselrichter (23) und dem Wechselstrommotor (3) mit der induktiven elektrischen Leistung des Wechselstrommotors (3) durch selektives Ansteuern eines Teils von Schaltelementen, die den Wechselrichter bilden, zum detektierten Zeitpunkt durch:
selektives Einschalten der Schaltelemente, die den zwei ausgewählten Phasen entsprechen, bei gleichzeitigem Ausschalten des Schaltelements, das der anderen einen Phase entspricht, und zwar von den Schaltelementen von drei Phasen, die den oberseitigen Zweig (24) und den unterseitigen Zweig (25) bilden, wenn der Wechselrichter (23) in dem Zeitpunkt angesteuert wird; oder
selektives Ausschalten der Schaltelemente, die den zwei ausgewählten Phasen entsprechen, bei gleichzeitigem Einschalten des Schaltelements, das der anderen einen Phase entspricht, und zwar von den Schaltelementen von drei Phasen, die den oberseitigen Zweig (24) und den unterseitigen Zweig (25) bilden, wenn der Wechselrichter (23) in dem Zeitpunkt angesteuert wird;
Detektieren des Freilaufstroms, der durch den ausgebildeten Strömungspfad hindurchfließt; und danach
Bestimmen der Rotationsrichtung nach Anhalten der Ausgangsleistung der elektrischen Leistungsumwandlungsvorrichtung (2) in Abhängigkeit von dem detektierten Freilaufstrom;
wobei die Rotationsrichtung nach Anhalten der Ausgangsleistung der elektrischen Leistungsumwandlungsvorrichtung (2) in Abhängigkeit von der Amplitude des Freilaufstroms, der in dem Zeitpunkt detektiert wird, bestimmt wird, und
wobei die Schaltelemente eines oberseitigen Zweigs (24) oder eines unterseitigen Zweigs (25), die den Wechselrichter (23) bilden, selektiv angesteuert werden, wenn der Wechselrichter (23) in dem Zeitpunkt angesteuert wird.

2. Verfahren zur Detektion einer Rotationsrichtung des Wechselstrommotors (3), wie in Anspruch 1 beschrieben, wobei ein Detektieren des Freilaufstroms durch einen Shunt-Widerstand (26) vorgenommen wird, der innerhalb des Wechselrichters (23) bereitgestellt ist.

3. Verfahren zur Detektion einer Rotationsrichtung des Wechselstrommotors (3), wie in Anspruch 1 beschrieben, wobei die Rotationsrichtung nach Anhalten der Ausgangsleistung der elektrischen Leistungsumwandlungsvorrichtung (2) durch Durchführen einer Detektion der Amplitude des Freilaufstroms eine vorbestimmte Anzahl von Malen bestimmt wird.

4. Verfahren zur Detektion einer Rotationsrichtung des Wechselstrommotors (3), wie in Anspruch 1 beschrieben, wobei die Rotationsrichtung nach Anhalten der Ausgangsleistung der elektrischen Leistungsumwandlungsvorrichtung (2) in Abhängigkeit von der Richtung des Freilaufstroms bestimmt wird, die in dem oben angeführten Zeitpunkt detektiert wird.

5. Verfahren zur Detektion einer Rotationsrichtung des Wechselstrommotors (3), wie in Anspruch 4 beschrieben, wobei alle Schaltelemente des oberseitigen Zweigs (24) oder des unterseitigen Zweigs (25), die den Wechselrichter (23) bilden, angesteuert werden, wenn der Wechselrichter (23) in dem Zeitpunkt angesteuert wird.

6. Verfahren zur Detektion einer Rotationsrichtung des Wechselstrommotors (3), wie in Anspruch 4 beschrieben, wobei das Detektieren des Freilaufstroms in dem Zeitpunkt in einer Vielzahl von Strompfaden zwischen dem Wechselstrommotor (3) und dem Wechselrichter (23) durchgeführt wird.

7. Verfahren zur Detektion einer Rotationsrichtung des Wechselstrommotors (3), wie in Anspruch 6 beschrieben, wobei die Rotationsrichtung nach Anhalten der Ausgangsleistung der elektrischen Leistungsumwandlungsvorrichtung (2) in Abhängigkeit von Richtungskombinationen des Freilaufstroms bestimmt wird, die in der Vielzahl von Strömungspfaden in dem Zeitpunkt detektiert werden.

8. Elektrische Leistungsumwandlungsvorrichtung (2) für einen Wechselstrommotor (3), umfassend:
einen Glättungskondensator (22) zum Glätten einer elektrischen Leistung, die von einer elektrischen Leistungsquelle (1) zuzuführen ist;
einen Wechselrichter (23) zum Wechselrichten einer elektrischen Gleichstromleistung aus dem Glättungskondensator (22) in eine elektrische Dreiphasenwechselstromleistung mit einer Soll-Frequenz derselben; und
einen Steuer-/Ansteuer-Abschnitt (4), der konfiguriert ist, Schaltelemente, die den Wechselrichter bilden, anzusteuern/zu steuern, wodurch die wechselgerichtete elektrische Wechselstromleistung mit der Soll-Frequenz derselben dem Wechselstrommotor (3) zugeführt wird, ferner umfassend
ein Mittel zum Detektieren eines Zeitpunktes, in dem Wechselspannungen von zwei aus einer induktiven elektrischen Dreiphasenwechselstromleistung aus dem Wechselstrommotor (3) ausgewählten Phasen einander überschneiden,
wobei der Steuer-/Ansteuer-Abschnitt (4) einen Strömungspfad für Freilaufstrom nur zwischen dem Wechselrichter (23) und dem Wechselstrommotor (3) mit der induktiven elektrischen Leistung des Wechselstrommotors (3) bildet, und zwar durch selektives Ansteuern eines Teils von Schaltelementen, die den Wechselrichter bilden, zum detektierten Zeitpunkt durch:
selektives Einschalten der Schaltelemente, die den zwei ausgewählten Phasen entsprechen, bei gleichzeitigem Ausschalten des Schaltelements, das der anderen einen Phase entspricht, und zwar von den Schaltelementen von drei Phasen, die den oberseitigen Zweig (24) und den unterseitigen Zweig (25) bilden, wenn der Wechselrichter (23) in dem Zeitpunkt angesteuert wird; oder durch
selektives Ausschalten der Schaltelemente, die den zwei ausgewählten Phasen entsprechen, bei gleichzeitigem Einschalten des Schaltelements, das der anderen einen Phase entspricht, und zwar von den Schaltelementen von drei Phasen, die den oberseitigen Zweig (24) und den unterseitigen Zweig (25) bilden, wenn der Wechselrichter (23) in dem Zeitpunkt angesteuert wird,
wobei der Steuer-/Ansteuer-Abschnitt (4) ferner die Rotationsrichtung nach Anhalten der Ausgangsleistung der elektrischen Leistungsumwandlungsvorrichtung (2) in Abhängigkeit von dem detektierten Freilaufstrom bestimmt, wenn die elektrische Dreiphasenwechselstromleistung dem Wechselstrommotor (3) nach Anhalten einer Ausgangsleistung der elektrischen Leistungsumwandlungsvorrichtung (2) erneut zugeführt wird;
wobei der Steuer-/Ansteuer-Abschnitt (4) die Rotationsrichtung nach Anhalten der Ausgangsleistung der elektrischen Leistungsumwandlungsvorrichtung (2) in Abhängigkeit von der Amplitude des in dem Zeitpunkt detektierten Freilaufstroms bestimmt; und
wobei der Steuer-/Ansteuer-Abschnitt (4) die Schaltelemente eines oberseitigen Zweiges (24) oder eines unterseitigen Zweiges (25), die den Wechselrichter (23) bilden, selektiv ansteuert, wenn der Wechselrichter (23) in dem Zeitpunkt angesteuert wird.

9. Elektrische Leistungsumwandlungsvorrichtung (2) für den Wechselstrommotor (3), wie in Anspruch 8 beschrieben, wobei ein Shunt-Widerstand (26) zum Durchführen der Detektion des Freilaufstroms innerhalb des Wechselrichters (23) bereitgestellt ist.

10. Elektrische Leistungsumwandlungsvorrichtung (2) für den Wechselstrommotor (3), wie in Anspruch 8 beschrieben, wobei der Steuer-/Ansteuer-Abschnitt (4) die Rotationsrichtung nach Anhalten der Ausgangsleistung der elektrischen Leistungsumwandlungsvorrichtung (2) durch Durchführen einer Detektion der Amplitude des Freilaufstroms eine vorbestimmte Anzahl von Malen bestimmt.

11. Elektrische Leistungsumwandlungsvorrichtung (2) für den Wechselstrommotor (3), wie in Anspruch 8 beschrieben, wobei der Steuer-/Ansteuer-Abschnitt (4) die Rotationsrichtung nach Anhalten der Ausgangsleistung der elektrischen Leistungsumwandlungsvorrichtung (2) in Abhängigkeit von der Richtung des Freilaufstroms bestimmt, die in dem oben angeführten Zeitpunkt detektiert wird.

12. Elektrische Leistungsumwandlungsvorrichtung für den Wechselstrommotor, wie in Anspruch 8 beschrieben, wobei der Steuer-/Ansteuer-Abschnitt alle Schaltelemente des oberseitigen Zweigs oder des unterseitigen Zweigs, die den Wechselrichter bilden, ansteuert, wenn der Wechselrichter in dem Zeitpunkt angesteuert wird.

13. Elektrische Leistungsumwandlungsvorrichtung (2) für den Wechselstrommotor (3), wie in Anspruch 8 beschrieben, ferner umfassend eine Vielzahl von Wechselstromdetektoren auf Strompfaden zwischen dem Wechselstrommotor (3) und dem Wechselrichter (23), wobei der Steuer-/Ansteuer-Abschnitt (4) die Richtung des Freilaufstroms nach Anhalten der Ausgangsleistung der elektrischen Leistungsumwandlungsvorrichtung (2) in Abhängigkeit von der Richtung des Freilaufstroms bestimmt, die durch den Detektor in dem Zeitpunkt detektiert wird.

14. Elektrische Leistungsumwandlungsvorrichtung (2) für den Wechselstrommotor (3), wie in Anspruch 8 beschrieben, wobei der Steuer-/Ansteuer-Abschnitt (4) die Rotationsrichtung nach Anhalten der Ausgangsleistung der elektrischen Leistungsumwandlungsvorrichtung (2) in Abhängigkeit von Richtungskombinationen des Freilaufstroms bestimmt, die auf der Vielzahl von Strompfaden in dem Zeitpunkt detektiert werden.

## Revendications

1. Procédé pour détecter la direction de rotation d'un moteur à courant alternatif (3), lors de la fourniture d'une puissance électrique alternative triphasée audit moteur à courant alternatif (3), après l'arrêt d'une sortie de celle-ci, dans un dispositif de conversion de puissance électrique (2), comprenant un condensateur de lissage (22) pour lisser une puissance électrique à fournir à partir d'une source de puissance électrique (1), et un onduleur (23) pour convertir une puissance électrique continue provenant dudit condensateur de lissage (22) en une puissance électrique alternative triphasée ayant une fréquence souhaitée de celle-ci, fournissant de ce fait ladite puissance électrique alternative convertie ayant la fréquence souhaitée audit moteur à courant alternatif (3), comprenant les étapes suivantes :
de détection d'une synchronisation à laquelle des tensions alternatives de deux phases sélectionnées à partir de la puissance électrique inductive alternative triphasée provenant dudit moteur à courant alternatif (3) se croisent l'une l'autre ;
de formation d'un trajet de circulation pour un courant de roue libre uniquement entre ledit onduleur (23) et ledit moteur à courant alternatif (3), avec la puissance électrique inductive dudit moteur à courant alternatif (3), en commandant une partie des éléments de commutation constituant ledit onduleur, de manière sélective, à cette synchronisation détectée, par :
la fermeture des éléments de commutation, de manière sélective, correspondant auxdites deux phases sélectionnées, tout en ouvrant l'élément de commutation correspondant à l'autre phase, parmi les éléments de commutation de trois phases constituant ladite branche de côté supérieur (24) et ladite branche de côté inférieur (25), lors de la commande dudit onduleur (23) à cette synchronisation ; ou
l'ouverture des éléments de commutation, de manière sélective, correspondant auxdites deux phases sélectionnées, tout en fermant l'élément de commutation correspondant à l'autre phase, parmi des éléments de commutation de trois phases constituant ladite branche de côté supérieur (24) et ladite branche de côté inférieur (25), lors de la commande dudit onduleur (23) à cette synchronisation ;
de détection du courant de roue libre circulant à travers ledit trajet de circulation formé ; et ensuite
de détermination de la direction de rotation après l'arrêt de la sortie dudit dispositif de conversion de puissance électrique (2), en fonction de ce courant de roue libre détecté ;
dans lequel la direction de rotation après l'arrêt de la sortie dudit dispositif de conversion de puissance électrique (2) est déterminée en fonction de l'amplitude du courant de roue libre détecté à cette synchronisation, et
dans lequel les éléments de commutation d'une branche de côté supérieur (24) ou d'une branche de côté inférieur (25) constituant ledit onduleur (23) sont commandés, de manière sélective, lors de la commande dudit onduleur (23) à cette synchronisation.

2. Procédé de détection pour la direction de rotation du moteur à courant alternatif (3), selon la revendication 1, dans lequel la détection dudit courant de roue libre est effectuée par une résistance shunt (26), qui est prévue dans ledit onduleur (23).

3. Procédé de détection pour la direction de rotation du moteur à courant alternatif (3), selon la revendication 1, dans lequel la direction de rotation après l'arrêt de la sortie dudit dispositif de conversion de puissance électrique (2) est déterminée, en effectuant la détection de l'amplitude de ce courant de roue libre un nombre prédéterminé de fois.

4. Procédé de détection pour la direction de rotation du moteur à courant alternatif (3), selon la revendication 1, dans lequel la direction de rotation après l'arrêt de la sortie dudit dispositif de conversion de puissance électrique (2) est déterminée, en fonction de la direction de ce courant de roue libre, qui est détectée à cette synchronisation mentionnée ci-dessus.

5. Procédé de détection pour la direction de rotation du moteur à courant alternatif (3), selon la revendication 4, dans lequel tous les éléments de commutation de ladite branche de côté supérieur (24) ou de ladite branche de côté inférieur (25), constituant ledit onduleur (23), sont commandés, lors de la commande dudit onduleur (23) à cette synchronisation.

6. Procédé de détection pour la direction de rotation du moteur à courant alternatif (3), selon la revendication 4, dans lequel la détection du courant de roue libre à cette synchronisation est effectuée dans une pluralité de trajets de courant entre ledit moteur à courant alternatif (3) et ledit onduleur (23).

7. Procédé de détection pour la direction de rotation du moteur à courant alternatif (3), selon la revendication 6, dans lequel la direction de rotation après l'arrêt de la sortie dudit dispositif de conversion de puissance électrique (2) est déterminée, en fonction de combinaisons de directions du courant de roue libre, qui sont détectées dans la pluralité de trajets de circulation à cette synchronisation.

8. Dispositif de conversion de puissance électrique (2) pour un moteur à courant alternatif (3), comprenant :
un condensateur de lissage (22) pour lisser une puissance électrique à fournir à partir d'une source de puissance électrique (1) ;
un onduleur (23) pour convertir une puissance électrique continue provenant dudit condensateur de lissage (22) en une puissance électrique alternative triphasée ayant une fréquence souhaitée de celle-ci ; et
une partie de contrôle/commande (4), qui est configurée pour commander/contrôler les éléments de commutation constituant ledit onduleur, fournissant de ce fait ladite puissance électrique alternative convertie ayant ladite fréquence souhaitée de celle-ci audit moteur à courant alternatif (3), comprenant en outre
des moyens pour détecter une synchronisation à laquelle des tensions alternatives de deux phases sélectionnées à partir de la puissance électrique inductive alternative triphasée provenant dudit moteur à courant alternatif (3) se croisent l'une l'autre, dans lequel
ladite partie de contrôle/commande (4) forme un trajet de circulation pour le courant de roue libre uniquement entre ledit onduleur (23) et ledit moteur à courant alternatif (3), avec la puissance électrique inductive dudit moteur à courant alternatif (3), en commandant une partie des éléments de commutation constituant ledit onduleur, de manière sélective, à cette synchronisation détectée, par :
la fermeture des éléments de commutation, de manière sélective, correspondant auxdites deux phases sélectionnées, tout en ouvrant l'élément de commutation correspondant à l'autre phase, parmi les éléments de commutation de trois phases constituant ladite branche de côté supérieur (24) et ladite branche de côté inférieur (25), lors de la commande dudit onduleur (23) à cette synchronisation ; ou
l'ouverture des éléments de commutation, de manière sélective, correspondant auxdites deux phases sélectionnées, tout en fermant l'élément de commutation correspondant à l'autre phase, parmi les éléments de commutation de trois phases constituant ladite branche de côté supérieur (24) et ladite branche de côté inférieur (25), lors de la commande dudit onduleur (23) à cette synchronisation,
dans lequel ladite partie de contrôle/commande (4) détermine en outre la direction de rotation après l'arrêt de la sortie dudit dispositif de conversion de puissance électrique (2), en fonction de ce courant de roue libre détecté, lors de la fourniture de la puissance électrique alternative triphasée audit moteur à courant alternatif (3), de nouveau, après l'arrêt d'une sortie dudit dispositif de conversion de puissance électrique (2) ;
dans lequel ladite partie de contrôle/commande (4) détermine la direction de rotation après l'arrêt de la sortie dudit dispositif de conversion de puissance électrique (2), en fonction de l'amplitude du courant de roue libre détectée à cette synchronisation ; et
dans lequel ladite partie de contrôle/commande (4) commande les éléments de commutation d'une branche de côté supérieur (24) ou d'une branche de côté inférieur (25) constituant ledit onduleur (23), de manière sélective, lors de la commande dudit onduleur (23) à cette synchronisation.

9. Dispositif de conversion de puissance électrique (2) pour le moteur à courant alternatif (3), selon la revendication 8, dans lequel une résistance shunt (26) pour effectuer la détection dudit courant de roue libre est prévue dans ledit onduleur (23).

10. Dispositif de conversion de puissance électrique (2) pour le moteur à courant alternatif (3), selon la revendication 8, dans lequel ladite partie de contrôle/commande (4) détermine la direction de rotation après l'arrêt de la sortie dudit dispositif de conversion de puissance électrique (2) en effectuant la détection de l'amplitude du courant de roue libre un nombre prédéterminé de fois.

11. Dispositif de conversion de puissance électrique (2) pour le moteur à courant alternatif (3), selon la revendication 8, dans lequel ladite partie de contrôle/commande (4) détermine la direction de rotation après l'arrêt de la sortie dudit dispositif de conversion de puissance électrique (2), en fonction de la direction de ce courant de roue libre, qui est détectée à cette synchronisation mentionnée ci-dessus.

12. Dispositif de conversion de puissance électrique pour le moteur à courant alternatif, selon la revendication 8, dans lequel ladite partie de contrôle/commande commande tous les éléments de commutation de ladite branche de côté supérieur ou de ladite branche de côté inférieur constituant ledit onduleur, lors de la commande dudit onduleur à cette synchronisation.

13. Dispositif de conversion de puissance électrique (2) pour le moteur à courant alternatif (3), selon la revendication 8, comprenant en outre une pluralité de détecteurs de courant alternatif sur les trajets de courant entre ledit moteur à courant alternatif (3) et ledit onduleur (23), dans lequel ladite partie de contrôle/commande (4) détermine la direction du courant de roue libre après l'arrêt de la sortie dudit dispositif de conversion de puissance électrique (2), en fonction de la direction du courant de roue libre, qui est détectée par ledit détecteur à cette synchronisation.

14. Dispositif de conversion de puissance électrique (2) pour le moteur à courant alternatif (3), selon la revendication 8, dans lequel ladite partie de contrôle/commande (4) détermine la direction de rotation après l'arrêt de la sortie dudit dispositif de conversion de puissance électrique (2), en fonction de combinaisons de directions du courant de roue libre, qui sont détectées sur la pluralité de trajets de courant à cette synchronisation.
